# EUROPEAN PATENT APPLICATION

(11) **EP 4 752 386 A1**
(43) Date of publication of application: **03.06.2026**
(21) Application number: 24216268.3
(22) Date of filing: 28.11.2024
(51) Int. Cl.: F16C 11/04, B60G 7/02, F16C 27/02, F16C 27/06

(54) **BUSHING FOR A JOINT ASSEMBLY FOR A VEHICLE SUSPENSION**

(71) Applicant: Volvo Car Corporation, 405 31 Göteborg (SE)
(72) Inventor: NORDELL, Magnus, 40531 Göteborg (SE); SKAGIUS, Adam, 40531 Göteborg (SE)
(74) Representative: Kransell & Wennborg KB

(57) **Abstract**

The disclosure relates to a bushing (100) for a joint assembly (10) for a vehicle suspension (1), the bushing (100) comprising:
- an inner cylinder portion (110) for receiving a pivot element (300) of the joint assembly (10), wherein the inner cylinder portion (110) comprises a longitudinal extension along a longitudinal axis (A) and two end faces (112) located at opposite longitudinal ends (111) of the inner cylinder portion (110);
- an outer cylinder portion (120) surrounding the inner cylinder portion (110); and
- an elastic portion (130) arranged between the inner cylinder portion (110) and the outer cylinder portion (120);
wherein at least one of the longitudinal ends (111) of the inner cylinder portion (110) comprises a protruding segment (113), the protruding segment (113) extending in height (H₁₁₃) in a direction of the longitudinal axis (A), protruding in height (H₁₁₃) beyond one of the end faces (112), and extending in length (L) circumferentially about the longitudinal axis (A).

## Description

### TECHNICAL FIELD

The present disclosure relates to a bushing for a joint assembly for a vehicle suspension, a joint assembly for a vehicle suspension, and a vehicle suspension.

### BACKGROUND ART

Tight and sealed attachment of joints is crucial to avoid hydrogen embrittlement of high strength screws used in the joints. This is particularly important in suspension screw joints and dynamically high loaded joints of vehicle suspensions. That is because water getting inside such joint can cause corrosion. A small corrosion damage on the surface of the screw can potentially cause the screw to snap off suddenly. Hence, the screw joint would not be functioning anymore, which would limit the function of the vehicle suspension and potentially make driving with the vehicle employing the vehicle suspension dangerous.

### SUMMARY

The problem is at least partially solved or alleviated by the subject matter of the independent claims of the present disclosure, wherein further examples are incorporated in the dependent claims.

According to a first aspect, there is provided a bushing for a joint assembly for a vehicle suspension. The bushing comprises an inner cylinder portion for receiving a pivot element of the joint assembly. The inner cylinder portion comprises a longitudinal extension along a longitudinal axis and two end faces located at opposite longitudinal ends of the inner cylinder portion. The bushing further comprises an outer cylinder portion surrounding the inner cylinder portion. Also, the bushing comprises an elastic portion arranged between the inner cylinder portion and the outer cylinder portion. At least one of the longitudinal ends of the inner cylinder portion comprises a protruding segment, the protruding segment extending in height in a direction of the longitudinal axis, protruding in height beyond one of the end faces, and extending in length circumferentially about the longitudinal axis.

In bushings used in joint assemblies of vehicle suspensions, the outer cylinder portions are subjected to shear forces coming from rotary components (e.g., rotary arms) of the vehicle suspensions. Advantageously, the protruding segment can increase the shear loading capacity of the entire joint assembly or, in other words, joint with little or no dependency on friction. This is because the protruding segment extends in height beyond or above its end face, thereby allowing it to grip or carve into a clevis side of a clevis of the joint assembly, in which the bushing is used. Thereby, the protruding segment creates a looking functionality with the clevis, increasing the shear loading capacity of the entire joint assembly. Additionally, the protruding segment extends in length or, in other words, longitudinally, i.e. by its largest extension in any dimension, circumferentially about the longitudinal axis of the inner cylinder portion or generally the bushing. Thereby, this locking functionality can advantageously be provided along an entire circumference of the longitudinal axis, e.g. along most or substantially the full outer perimeter of the end face, significantly increasing the shear loading capacity of the joint assembly. Additionally, the locking functionality can aid in the tightening and sealing of the joint assembly, preventing water from getting in between the pivot element and inner cylinder portion and thus effectively reducing or preventing corrosion.

Generally, the bushing may comprise a cylindrical shape and consist of several portions, which may also have a cylindrical or other shape. These portions are herein referred to as the inner cylinder portion, the outer cylinder portion and the elastic portion. These portions may all generally have a cylindrical shape, and the bushing may or may not be limited to these cylindrical portions. For example, the bushing may comprise a metal material. Specifically, the inner cylinder portion and the outer cylinder portion may comprise or be made from a metal material, whereas the elastic portion may comprise or be made from an elastic material, e.g. an elastomer. Specifically, the elastic portion may be sandwiched or otherwise arranged in between the inner cylinder portion and the outer cylinder portion.

The inner cylinder portion may in particular have the shape of a cylinder with an opening or channel. The opening or channel may extend from one end face at one longitudinal end of the inner cylinder portion to the other end face at its opposite longitudinal end. The opening or channel may extend in the middle of the inner cylinder portion and along its longitudinal axis, which is the axis along which the inner cylinder portion extends with its length, i.e. its largest extension in one dimension. The pivot element, e.g. a screw, shaft, pin or similar element, may be received through or inside the opening or channel. The longitudinal axis may be a rotationally symmetric axis for the inner cylinder portion, the outer cylinder portion and/or the elastic portion. An inner diameter of the opening or channel may be substantially equal or larger in size than an outer diameter of the pivot element. The end faces at the opposite longitudinal ends of the inner cylinder portion may be substantially flat faces except for the protruding segment protruding above it and, in particular but not limited to this, from it or as extension therefrom.

The outer cylinder portion may in particular have the shape of a cylinder with an opening or channel. This opening or channel may be significantly larger than the opening or channel of the inner cylinder portion such that the inner cylinder portion and the elastic portion may be received within these. Specifically, the outer cylinder portion may be enclosing, in particular substantially in full, the elastic portion, and the elastic portion may, in particular substantially in full, enclose the inner cylinder portion. The outer cylinder portion may comprise one or more attachment means or segments for attachment to a rotary component of the vehicle suspension.

The elastic portion may provide an elastic function for the joint assembly within the bushing. The elastic portion may generally be from an elastic material or otherwise have an elastic effect, e.g. formed as a mechanical spring or similar. At its longitudinal ends, the elastic portion may be U-shaped or, in other words, be recessed. The U-shape or recesses may be provided along the longitudinal axis. Thereby, the elastic portion may provide (further) elastic properties. However, thereby water or ingress may potentially enter into a space between the pivot element and the inner cylinder portion, which could potentially cause corrosion. This can be prevented inter alia by the protruding segment and optionally by a further protruding segment on the elastic portion as further described herein.

According to an example, the protruding segment may be formed as a protruding ring on one of the end faces. As a ring, the protruding segment may substantially in full or fully extend around the circumference of the longitudinal axis and on one of the end faces. The protruding ring may be with one or more interruptions, e.g. recesses, along its extensions or without any interruptions. The protruding ring may in particular be continuous. This means that the protruding ring is without interruptions like recesses. Specifically, this may mean that a minimum height above the end face is maintained along the longitudinal extension of the protruding ring. In particular, the height above the end face along the longitudinal extension of the protruding ring may be a substantially constant height. The protruding ring further enhances the locking functionality of the protruding segment for enlarged shear loading capacity and watertight sealing of the joint assembly.

According to an example, the protruding segment may extend in length along an outer circumference of the inner cylinder portion. In particular, the protruding segment may in length or, in other words, longitudinally extend along an outer or outermost perimeter of the inner cylinder portion on the end face. Accordingly, the locking function of the protruding segment may be provided at the outer or outermost perimeter of the inner cylinder portion. Specifically, that may be where an optional further protruding segment of the elastic portion may be provided and extend, in length, together with the protruding segment.

According to an example, the protruding segment may be configured as a sealing segment for sealing the bushing against a clevis in the joint assembly. As such, the protruding segment is configured to provide a sealing function against the clevis. For example, the protruding segment may be geometrically shaped as defined herein, e.g. with a pointed peak or end, such that it cuts or grips into the clevis and thereby establishes the sealing against the clevis.

According to an example, at least one of two opposite longitudinal ends of the elastic portion may comprise a further protruding segment, the further protruding segment extending in height in a direction of the longitudinal axis, protruding in height beyond one of the end faces, and extending in length circumferentially about the longitudinal axis. The further protruding segment may be comprising or made of elastic material, in particular the same elastic material as the one used in the elastic portion. Specifically, the further protruding segment may be an elastic protruding segment. In particular, the further protruding segment may be formed as a sealing lip. In particular, the further protruding segment may be formed as a sealing ring or ring-shaped sealing lip, which may circumferentially extend in length around the longitudinal axis. As a ring, the further protruding segment may substantially in full or fully extend around the circumference of the longitudinal axis. The further protruding ring may in particular be without interruptions, e.g. recesses, along its extensions. The further protruding ring may in particular be continuous. This means that the further protruding ring is without interruptions like recesses. Specifically, this may mean that a minimum height is maintained along the longitudinal extension of the further protruding ring. In particular, the height above the adjacent face end of the inner cylinder portion's longitudinal end along the longitudinal extension of the ring may be a substantially constant height. The protruding segment, on the other hand, may be an inelastic or stiff protruding segment. The protruding segment may mainly contribute to the locking functionality described herein, whereas the further protruding segment may mainly contribute to an elastic sealing functionality.

According to an example, the further protruding segment may extend in length along an inner circumference of the elastic portion. In particular, the further protruding segment may in length or, in other words, longitudinally extend along an inner or innermost perimeter of the elastic portion and at its longitudinal end. Accordingly, the sealing function of the further protruding segment may be provided at the inner or innermost perimeter of the elastic portion and in adjacency to the outer perimeter of the inner cylinder portion.

According to an example, the further protruding segment and the protruding segment may be extending in length adjacently to one another. In particular, the further protruding segment and the protruding segment may be directly adjacent to one another, in particular along their entire length. Thereby, a type of double sealing with both herein mentioned main functions is provided by means of the protruding segment and the further protruding segment.

According to an example, the further protruding segment may be vulcanized to the protruding segment. As such, the further protruding segment may be formed from a vulcanizable material, which may be a polymer material. In particular, the elastic portion may be vulcanized together with the further protruding segment to the inner cylinder portion or separately. Generally, the inner cylinder portion with the protruding segment may be manufactured as one piece or, in other words, integrally or alternatively, separately. Similarly, the elastic portion and the further protruding segment may be manufactured as one piece or, in other words, integrally or alternatively, separately.

According to an example, both longitudinal ends of the inner cylinder portion may comprise a protruding segment and both longitudinal ends of the elastic portion may comprise a further protruding segment. In other words, the protruding segment and the further protruding segment may be provided on each longitudinal end of the inner cylinder portion and the elastic portion, thereby providing the locking and sealing functionality as described herein at both longitudinal ends towards clevis sides of a clevis in a joint assembly.

According to an example, the protruding segment and the further protruding segment may comprise the substantially same height. Substantially same height herein includes a manufacturing deviation of up to 20 %, in particular up to 10 % or 5 % from one another. The height in each case can be calculated along the longitudinal axis and from the end face, in particular a flat part of the end face, from which the protruding segment may extend in height along the longitudinal axis.

According to an example, the protruding segment may comprise a pointed peak. The further protruding segment may comprise a blunt peak. With the pointed or, in other words, sharp peak, the protruding segment can easily engage with the clevis in a notching or cutting manner, creating a strong locking functionality. With the blunt peak, the further protruding segment can create a strong and large seal against the clevis.

According to an example, the protruding segment and/or the further protruding segment may comprise a height in the range from 0.1 to 0.5 mm, in particular from 0.2 to 0.4 mm. It has been found that with a height in this range, the protruding segment can securely create sufficient locking functionality without breaking and the further protruding segment can create sufficient sealing functionality without getting brittle or losing contact to the clevis.

According to an example, the protruding segment and/or the further protruding segment may comprises a width along a radial direction in the range from 0.1 to 0.5 mm, in particular from 0.2 to 0.4 mm, wherein the radial direction is transverse, in particular perpendicular, to the longitudinal axis. It has been found that with a height in this range, the protruding segment can securely create sufficient locking functionality without breaking and the further protruding segment can create sufficient sealing functionality without getting brittle or losing contact to the clevis.

According to a second aspect, there is provided a joint assembly for a vehicle suspension, the joint assembly comprising a bushing according to the first aspect, the pivot element and a clevis. The pivot element is received inside the inner cylinder portion of the bushing and inside the clevis. The bushing is arranged between opposite clevis sides of the clevis such that the protruding segment is compressed in its height between one of the end faces and one of the clevis sides.

When a further protruding segment is present on the bushing, also the further protruding segment may be compressed in its height between one of the end faces and one of the clevis sides. The compression can be caused by interference fit or press fit between the bushing and the clevis, thereby deforming or compressing the protruding segment and the further protruding segment. The protruding segment may on the one hand be compressed in height but also cut or grip into the clevis side. The further protruding segment may be compressed so as to create a sealing lip.

According to a third aspect, there is provided a vehicle suspension comprising the joint assembly of the second aspect. The outer cylinder portion of the bushing is connected to a rotary component of the vehicle suspension and the clevis is connected to another component of the vehicle suspension.

For example, the rotary component may be a rotary arm of the vehicle suspension. The other component to which the clevis is connected may for example be a static component, meaning that it is not provided for relative movement inside the vehicle suspension (unlike the rotary arm) but can be moved together with the whole vehicle suspension, e.g. up and down when the vehicle with the vehicle suspension is passing a bump.

Another aspect of this disclosure may include a vehicle comprising the vehicle suspension of the third aspect. Additionally, the vehicle may comprise a vehicle frame, to which the vehicle suspension may be attached. The other component may be part of the vehicle suspension and/or the vehicle frame.

The vehicle may in particular but not only be a car, e.g. a passenger car or a truck. The vehicle suspension may in particular but not only be an automobile suspension. Generally, while the bushing is for a joint assembly for a vehicle suspension, it is not excluded that the bushing may be used for other purposes, specifically for joint assemblies in other systems or devices than vehicle suspensions. Also, the joint assembly is not limited to vehicle suspensions and could be used for other purposes.

It is noted that the above examples may be combined with each other irrespective of the aspect involved. A

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a perspective view of a vehicle suspension.
- Figure 2: shows a cross-sectional view of a joint assembly in the vehicle suspension of Fig. 1.
- Figure 3: shows a cross-sectional view of a bushing of the joint assembly of Fig. 2.
- Figure 4: shows a perspective view of an inner cylinder portion of the bushing of Fig. 3.
- Figure 5: shows a perspective view of a detail of the bushing of Fig. 3.

### DETAILED DESCRIPTION

The Figures are merely schematic representations and serve only to illustrate examples of the disclosure. Identical or equivalent elements are in principle provided with the same reference signs.

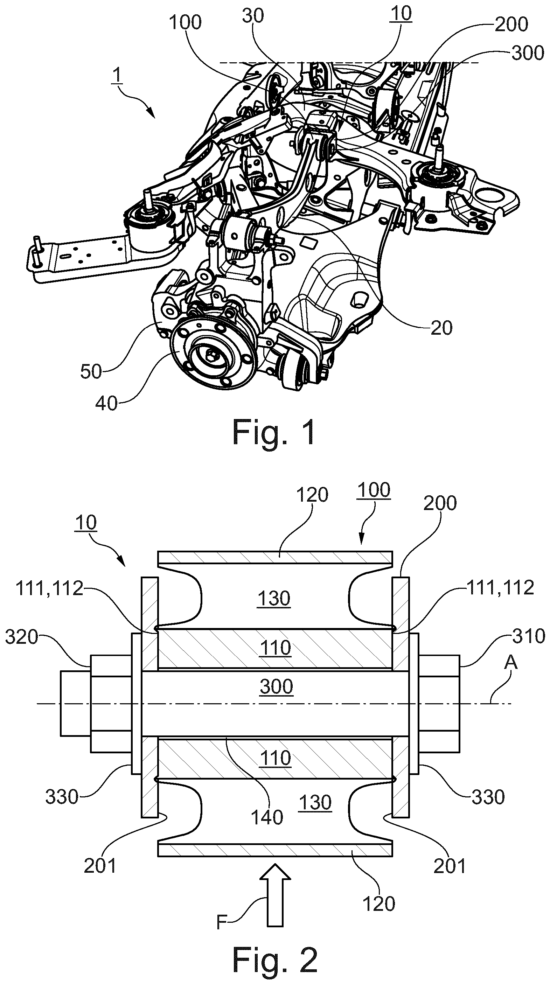

Fig. 1 shows a perspective view of a part of an exemplary vehicle suspension 1 for a vehicle (not shown). The vehicle suspension 1 comprises typical parts such as a wheel hub 40, steering knuckle 50, rotary component 20, and so on. The vehicle suspension 1 is herein to be understood broadly and can include components of a vehicle frame. The vehicle suspension 1 for example further comprises another component 30, which may be a static component, to which a vehicle wheel is linked when attached to the wheel hub 40.

In the example of Fig. 1, a joint assembly 10 with a bushing 100, a clevis 200 and a pivot element 300 is being used to link or connect the rotary component 20, e.g. rotary arm, to the other component 30, e.g., static component. Similarly, the other bushing that is seen in Fig. 1 to be located at the steering knuckle 50 and/or any other bushing of the vehicle suspension 1 may have the same design as further described herein with respect to the bushing 100 or may have another design.

Fig. 2 shows a cross-sectional view of the bushing 100. The bushing 100 generally has a length extending along a longitudinal axis A, which may be a symmetry axis of the bushing 100.

The bushing 100 comprises an inner cylinder portion 110 with an opening 140 or through-hole extending along the length of the bushing 100 from one end to the other end. The pivot element 300 is inserted therethrough and thus extends inside the opening 140.

Here, the pivot element 300 is exemplary shown as a screw element with a head 310. The screw element is fixed against a clevis 200 in between the head 310 and a nut 320 located opposite of the head 310 and threaded onto a corresponding threaded part of the screw element. The head 310 and nut 320 are secured against the clevis 200 from opposite sides and with washers 330 placed in between. The clevis 200 similarly to the inner cylinder portion 110 has an opening or through-hole for the pivot element 300.

The bushing 100 further comprises an elastic portion 130 made from an elastic material, e.g. a polymer or rubber, adjacently located to the inner cylinder portion 110 and fully surrounding or enclosing the inner cylinder portion 110. The elastic portion 130 is in turn surrounded or enclosed by an outer cylinder portion 120, which may be from the same material as the inner cylinder portion 110, e.g. a metal material.

As seen in Fig. 2, the bushing 100 is press-fitted in between the inner clevis sides 201 of the clevis 200 by having the screw element tightened on the outer clevis sides opposite of the inner clevis sides 201.

As further seen in Fig. 1, the rotary component 20 may be attached to the outer side of the outer cylinder portion 120 and the other component 30 may be attached to the clevis 200.

In the bushing 100 of Fig. 2 used in the joint assembly 10 of the vehicle suspension 1 of Fig. 1, the outer cylinder portion 120 can be subjected to shear forces F coming from the rotary component 20. To withstand these shear forces F, a high shear loading capacity of the bushing 100 may be required. Additionally, despite the press-fitting of the bushing 100 between the clevis 200, water can potentially enter the space between the pivot element 300 and the inner cylinder portion 110, potentially causing corrosion.

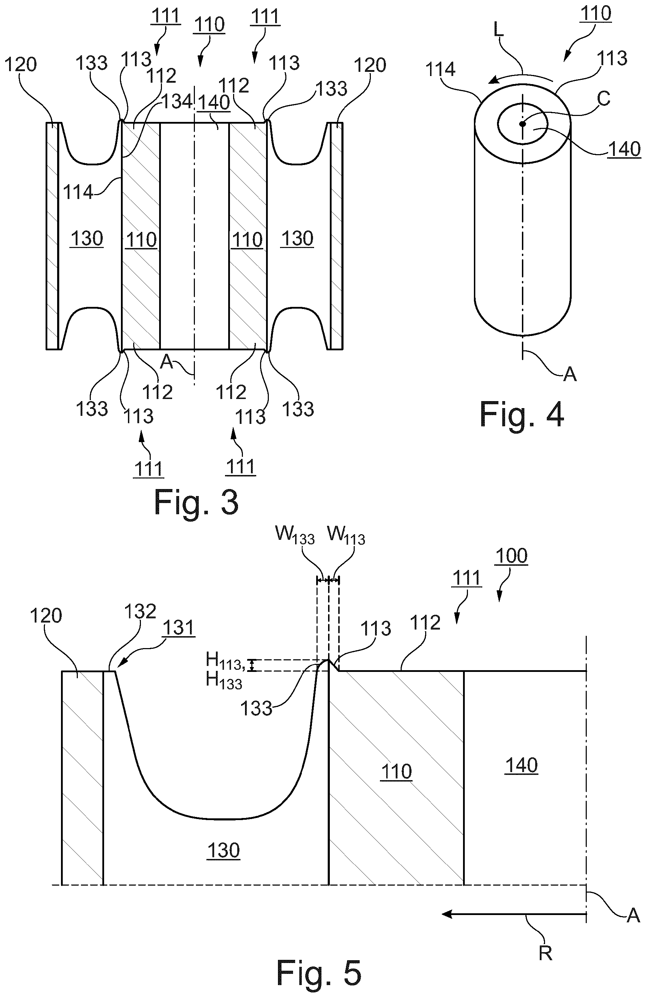

To provide high shear loading capacity and a watertight sealing, the inner cylinder portion 110 is provided with a protruding segment 113 and the elastic portion 130 is provided with a further protruding segment 133 as seen in the cross-sectional view of the bushing 100 in Fig. 3. Specifically, as seen in Figs. 2 and 3, the inner cylinder portion 110 comprises opposite longitudinal ends 111 with end faces 112, which may be for the most part or substantially entirely planar or flat with the exception of the protruding segment 113 provided thereon.

As further seen in the perspective view of the inner cylinder portion 110 in Fig. 4 and the detailed cross-sectional view of the bushing 100 in Fig. 5, the protruding segment 113 extends in height H₁₁₃ above or, in other words, beyond the end face 112 in the longitudinal extension of the bushing 100 or inner cylinder portion 110. The height H₁₁₃ is measured along the longitudinal axis A and thus along the length of the bushing 100. The protruding segment 113 further extends in length L circumferentially about the longitudinal axis A, specifically around a center C in the opening 140. More specifically, in this example, the protruding segment 113 extends in length L as a protruding ring on the end face 112 along an outer circumference 114 of the inner cylinder portion 110. The protruding ring is provided on both opposite end faces 112 of the inner cylinder portion 110.

Similarly to the protruding segment 113, the elastic portion 130 comprises a further protruding segment 133, which is also formed as a protruding ring but from an elastic material rather than a stiff or rigid material as the protruding segment 113, which may be metal, for example. The further protruding segment 113 is designed as an elastomer sealing lip in this example and extends in length together and directly adjacent to the protruding segment 113 on an inner circumference 134 of the elastic portion 130 as seen in Figs. 3 and 5. The further protruding segment 133 extends in height H₁₃₃ above or beyond the end face 112 or an extended or imaginary plane of the end face 112 or above or beyond an end face 132 of the elastic portion 130 at a longitudinal end 131 of the elastic portion 130. The extended or imaginary plane in this regard can be extended or imagined from the end face 112 to the elastic portion 130. The heights H₁₁₃, H₁₃₃ of both segments 113, 133 may be substantially the same.

The protruding segment 113 is exemplary shown with a pointed peak and the further protruding segment 133 is exemplary shown with a blunt peak. Also, the protruding segment and the further protruding segment 133 have widths W₁₁₃, W₁₃₃ as seen in Fig. 5, which may be measured in a radial direction R perpendicular to the longitudinal axis. Also, the widths W₁₁₃, W₁₃₃ of both segments 113, 133 may be substantially the same. The widths W₁₁₃, W₁₃₃ herein refer to the largest widths along the heights H₁₁₃, H₁₃₃ of the segments 113, 133.

When the bushing 100 is inserted into the space between the inner clevis sides 201 of the clevis 100 and press-fitted, the protruding segment 113 cuts or grips into the clevis 200, thereby creating a locking functionality enabling the bushing to withstand high shear loading forces. The protruding segment 113 thereby at least partially is compressed in height H₁₁₃, which is not seen in Fig. 2 to the relatively small size of the protruding segment 113. Additionally, the further protruding segment 133 is compressed between the clevis side 201 and the elastic portion 130, forming a sealing lip around the protruding segment 113, inhibiting the opening 140 or space between the pivot element 300 and the inner cylinder portion 110 from being filled with water and thus being corroded.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: vehicle suspension
- 10: joint assembly
- 20: rotary component
- 30: other component
- 40: wheel hub
- 50: steering knuckle
- 100: bushing
- 110: inner cylinder portion
- 111: longitudinal end of inner cylinder portion
- 112: end face of inner cylinder portion
- 113: protruding segment
- 114: outer circumference
- 120: outer cylinder portion
- 130: elastic portion
- 131: longitudinal end of elastic portion
- 132: end face of elastic portion
- 133: further protruding segment
- 140: opening
- 200: clevis
- 201: clevis side
- 300: pivot element
- 310: head
- 320: nut
- 330: washer
- A: longitudinal axis
- C: center
- F: shear force

- H: height
- L: length of protruding segment
- R: radial direction
- W: width

## Claims

1. A bushing (100) for a joint assembly (10) for a vehicle suspension (1), the bushing (100) comprising:
- an inner cylinder portion (110) for receiving a pivot element (300) of the joint assembly (10), wherein the inner cylinder portion (110) comprises a longitudinal extension along a longitudinal axis (A) and two end faces (112) located at opposite longitudinal ends (111) of the inner cylinder portion (110);
- an outer cylinder portion (120) surrounding the inner cylinder portion (110); and
- an elastic portion (130) arranged between the inner cylinder portion (110) and the outer cylinder portion (120);
wherein at least one of the longitudinal ends (111) of the inner cylinder portion (110) comprises a protruding segment (113), the protruding segment (113) extending in height (H₁₁₃) in a direction of the longitudinal axis (A), protruding in height (H₁₁₃) beyond one of the end faces (112), and extending in length (L) circumferentially about the longitudinal axis (A).

2. The bushing (100) of claim 1, wherein the protruding segment (113) is formed as a protruding ring on one of the end faces (112).

3. The bushing (100) of claim 1 or 2, wherein the protruding segment (113) extends in length along an outer circumference (114) of the inner cylinder portion (110).

4. The bushing (100) of any one of the previous claims, wherein the protruding segment (113) is configured as a sealing segment for sealing the bushing (100) against a clevis (200) in the joint assembly (10).

5. The bushing (100) of any one of the previous claims, wherein at least one of two opposite longitudinal ends (131) of the elastic portion (120) comprises a further protruding segment (133), the further protruding segment (133) extending in height (H₁₃₃) in a direction of the longitudinal axis (A), protruding in height (H₁₃₃) beyond one of the end faces (112), and extending in length (L) circumferentially about the longitudinal axis (A).

6. The bushing (100) of claim 5, wherein the further protruding segment (133) extends in length along an inner circumference (134) of the elastic portion (130).

7. The bushing (100) of claim 5 or 6, wherein the further protruding segment (133) and the protruding segment (113) are extending in length (L) adjacently to one another.

8. The bushing (100) of any one of claims 5 to 7, wherein the further protruding segment (133) is vulcanized to the protruding segment (113).

9. The bushing (100) of any one of claims 5 to 8, wherein both longitudinal ends (111) of the inner cylinder portion (110) comprise a protruding segment (113) and both longitudinal ends (131) of the elastic portion (130) comprise a further protruding segment (133).

10. The bushing (100) of any one of claims 5 to 9, wherein the protruding segment (113) and the further protruding segment (133) comprise the substantially same height (H₁₁₃, H₁₃₃).

11. The bushing (100) of any one of claims 5 to 10, wherein the protruding segment (113) comprises a pointed peak, and/or the further protruding segment (133) comprises a blunt peak.

12. The bushing (100) of any one of claims 5 to 11, wherein the protruding segment (113) and/or the further protruding segment (133) comprises a height (H₁₁₃, H₁₃₃) in the range from 0.1 to 0.5 mm, in particular from 0.2 to 0.4 mm.

13. The bushing (100) of any one of the previous claims, wherein the protruding segment (113) and/or the further protruding segment (133) comprises a width (W₁₁₃, W₁₃₃) along a radial direction (R) in the range from 0.1 to 0.5 mm, in particular from 0.2 to 0.4 mm, wherein the radial direction (R) is transverse to the longitudinal axis (A).

14. A joint assembly (10) for a vehicle suspension (1), the joint assembly (10) comprising a bushing (100) of any one of the previous claims, the pivot element (300) and a clevis (200), wherein the pivot element (300) is received inside the inner cylinder portion (110) of the bushing (100) and inside the clevis (200), and wherein the bushing (100) is arranged between opposite clevis sides (201) of the clevis (200) such that the protruding segment (113) is compressed in its height (H₁₁₃) between one of the end faces (112) and one of the clevis sides (201).

15. A vehicle suspension (1) comprising the joint assembly (10) of claim 14, wherein the outer cylinder portion (120) of the bushing (100) is connected to a rotary component (20) of the vehicle suspension (1) and the clevis (200) is connected to another component (30) of the vehicle suspension (1).
